Europäisches Patentamt

European Patent Office

Office européen des brevets

(11) Publication number: **0 448 872 A2**

## EUROPEAN PATENT APPLICATION

(21) Application number: 90313510.1

(22) Date of filing: **12.12.90**

(51) Int. Cl.⁵: **C08J 5/18**, C08L 23/02

(30) Priority: **26.03.90 US 499181**

(43) Date of publication of application:
**02.10.91 Bulletin 91/40**

(84) Designated Contracting States:
**DE FR GB IT**

(71) Applicant: **TREDEGAR INDUSTRIES, INC.**
**1100 Boulders Parkway**
**Richmond, Virginia 23225(US)**

(72) Inventor: **Weng, Tung Yao**
**300 Franklin Court, Apt G**
**Terre Haute, Indiana 47803(US)**
Inventor: **Ray, Carl Douglas**
**R.R. 53, Box 149**
**Terre Haute, Indiana 47805(US)**

(74) Representative: **Baverstock, Michael George**
**Douglas et al**
**BOULT, WADE & TENNANT 27 Furnival Street**
**London, EC4A 1PQ(GB)**

(54) One-side matte polyolefin-based film for pressure-sensitive labels.

(57) A one-side matte embossed film useful for pressure-sensitive label applications comprises a polyolefin-based polymer as a first component, a second component comprising at least one material incompatible with the polyolefin polymer which improves stiffness and die-cuttability of the film, and a third component which improves flexibility and squeezability of the film.

EP 0 448 872 A2

This invention relates to thermoplastic films. More specifically, the invention relates to one-side matte embossed polyolefin-based films which are useful for pressure-sensitive label applications. The one-side matte embossed polyolefin-based film is especially useful as a facestock label material which can be applied onto flexible, semi-flexible, or rigid packaging and container products. The pressure-sensitive coated facestock labels made from the film of the present invention are flexible, conformable and squeezable even on circular and cylindrical containers and products.

Pressure-sensitive labels are increasingly being used by the packaging industry. The pressure-sensitive labels are manufactured with varying characteristic strengths and dimensions in order to meet the specific demands of the packaging industry. For instance, the packaging industry not only uses rigid materials such as metal and glass for containers, but also is now using semi-flexible or flexible materials such as plastics - polyvinyl chloride (PVC), polyethylene (PE), polypropylene (PP), polyethylene terephthalate (PET), and the like. In particular, the use of semi-flexible or flexible containers poses such new problems for the packaging industry as sufficient adherence of a label to the container. The packaging industry often must stock many types of label materials in order to meet the needs of the particular type of packaging material being used.

Pressure sensitive labels consist basically of three components: a release liner, a pressure-sensitive adhesive and a facestock material (or actual label). The function of a release liner is to protect the adhesive, act as a die-cutting base and carry the facestock material through a converting process. The facestock material serves primarily as the substrate (or the actual label). One side is printed with the intended decoration, design or message while the opposite side is coated with the designated pressure-sensitive adhesive system.

Pressure-sensitive labels are subjected to various converting processes or steps during their manufacture and use. The major processes include (1) coating one side of the facestock material with a pressure-sensitive adhesive, (2) laminating the release liner to the facestock material and adhesive system, (3) printing on the facestock side, (4) die cutting of the facestock material and removing the facestock from the release liner, referred to as label dispensing, and (5) applying the facestock to the surface of the end-use product.

For various types of label uses or applications it is important that the facestock material be stiff enough to be handled properly during the converting process, especially the label dispensing and application steps. A lack of stiffness can result in failure of the facestock material to dispense off the liner or result in the misapplication of the label on the surface of the product. Stiffness of the facestock material is generally defined as the resistance to tension or to bending. The stiffness of a material is represented by the elastic or tensile modulus when the mode of deformation is tension or by the flexural modulus when the mode of deformation is bending. For films, stiffness is a function of the gauge of the film and the inherent stiffness of the material of which the film is made. Other factors in influencing the stiffness of a film include the method of manufacturing (blown, cast, or any orientation-induced fabrication step) as well as the processing conditions of the film.

In addition, it is important in certain applications that the facestock be easily cuttable by means of a rotary die. This requirement stems from the development in automation and increase in processing speeds. The ease of die-cuttability of a material is determined by a combination of tensile strength, tear resistance and elongation at failure. Currently, the area under the stress-strain curve is used as a good indicator of die-cuttability. A small area indicates less energy is needed to break or cut the material. A larger area under the stress-strain curve means a tougher material that would be difficult to die-cut.

A majority of the pressure-sensitive coated labels currently in use have facestock materials made from paper. Other facestock materials used include calendered plasticized polyvinyl chloride (PVC), and, to a lesser extent, biaxially oriented polyethylene terephthalate (PET), polystyrene (PS), polypropylene (PP), low density polyethylene (LDPE) and medium density polyethylene (MDPE). However, there are major drawbacks to using each of the facestock materials. The paper facestock material does not have the requisite durability for most packaging and labeling uses. The paper facestock is not resistant to moisture damage and often there is resulting deterioration of scuff resistance of the paper label. In addition, tunneling often occurs. Tunneling is the phenomenon where, upon flexing of a container or product, the adhesive delaminates from the facestock material and preferentially adheres to the container or product labeled. The label then has streaks of wrinkles or tunnels which are considered objectionable defects in the finished product. Further, the use of paper facestock material is expensive and the finished container or product cannot be recycled with the label attached.

While calendered plasticized PVC is one of the most widely used facestock materials there are still drawbacks to its use. The loss of plasticizers in the PVC film label, due to their migration to the surface of the film, detrimentally effects the properties of the PVC film label. In addition to the high cost of PVC labels, the PVC labels have color buildup or yellow over time when exposed to light. Further, the PVC labels have excessive shrinkage when used on hot fill containers or products. Also, containers or products with PVC labels have poor recycling capability.

Facestock materials made with PET are very expensive, and therefore are not suitable in many applications. Also, the PET facestock material is difficult to die cut, which poses not only additional cost concerns, but also manufacturing and processing problems.

Facestock materials of PS are subject to tunneling or wrinkling and also are subject to crazing/flex-cracking. The crazing/flex-cracking phenomenon happens upon flexing where tiny cracks are formed in the PS material.

The major drawback to using polyolefin facestock materials such as PP and PE is their limited usefulness due to poor die cuttability and low stiffness of the PP and PE films. While deformable labels made solely with LDPE or MDPE have been disclosed in U.S. Patent No. 4,587,158, it is further stated therein that the use of high density polyethylene (HDPE) is not suitable for deformable labels due to separation of the label from the adhered surface upon flexing of the container.

It has now been discovered that by combining a polyolefin polymer with additional components to improve stiffness, die cuttability and flexibility, a pressure-sensitive label having improved properties can now be produced at less cost.

Therefore, it is an important object of this invention to show that pressure-sensitive labels can be successfully produced by the use of one-side matted polyolefin-based films.

Other objects and advantages of the invention will become more readily apparent from a consideration of the description hereafter.

In accordance with the present invention there is provided a one-side matte polyolefin-based film useful in pressure-sensitive label applications as a facestock material. The film of the present invention has inherent resistance to moisture, and therefore, retains good scuff resistance. The polyolefin-based film material shows no tendency to wrinkle or tunnel and is cost competitive. The polyolefin-based film material is more compatible with the various recyclable thermoplastic containers or products than other facestock materials. The polyolefin-based film material will not yellow or have the color buildup problems normally associated with PVC materials. In addition, shrinkage of the polyolefin-based film material is eliminated through proper blend and process conditions of the film.

It is well documented that various plastics are much more sensitive to flex-cracking than polyolefins. The polyolefin-based film material of the present invention shows no crazing/flex-cracking problems. Further, the stiffness and die-cuttabilility properties of the polyolefin-based film material are significantly improved over many currently available facestock materials.

The polyolefin-based film material of the present invention comprises a first component comprising a polyolefin polymer, and at least one second component which enhances the stiffness and die-cuttability properties of the film and at least one third component which improves the flexibility or squeezability properties of the film. The second component can be a polymeric system, an inorganic filler material or a combination of both. The third component can be a thermoplastic elastomeric material or a vulcanized thermoset rubber material. The second component is incompatible with the polyolefin polymer such that when the second component is incorporated with the polyolefin polymer, the resulting film breaks easily when subjected to tension.

In preferred embodiments the polyolefin-based film of the present invention can have a matte finish on one side and a smooth finish on the other side. In addition, the polyolefin-based film can be white or clear such that the label-end user can have a choice of labels which are white matte or glossy or clear matte or glossy.

These and other advantages of the present invention will become apparent from the following description and claims.

The present invention relates to a polyolefin-based film having a matte embossed finish on one side and a smooth finish on the other side. The thickness of the polyolefin-based film can range from about 1 to about 5 mils. Excellent results have been achieved with films having a thickness of about 2.5 to about 3.5 mils.

The polyolefin-based film comprises a first component of at least one polyolefin polymer. It is contemplated that the first component comprises about 55 to 90 percent, by weight, based on weight of the polyolefin-based film; and, in certain embodiments, about 70-80 percent by weight.

Suitable polyolefin polymers including polypropylene (PP) or polyethylene (PE) having a density which ranges from at least about 0.90 to about 0.965 g/cc, such as, for example, medium density polyethylene (MDPE) generally having a density in the range of about 0.93 to about 0.94 g/cc. measured at 25°C or, preferably, high density polyethylene (HDPE) having a density about 0.94 to about 0.965 g/cc. The density of the polyolefin-based film is generally higher than the density of the polyolefin itself. The films of the present invention have a density between about 0.95 to about 1.2 g/cc. Excellent success has been achieved using a film comprising HDPE wherein the film has a density in the range of about 0.98 to about 1.1 g/cc.

At least one second component is incorporated with the polyolefin polymer to make the film of the present invention. The second component provides stiffness to the polyolefin-based film and acts to lower the elongation of the polyolefin-based film. The second component can be selected from a variety of materials which are incompatible with the polyolefin polymer including a polymeric material such as polystyrene or polymethyl methacrylate, or an inorganic filler material such as mica, calcium carbonate, or Kaolin, known commonly as clay. The average particle size of the second component ranges from about 2-44 microns. In one embodiment, the second component is present in about 5 to 25 percent, by weight, based on the weight of the film, and in certain embodiments, about 5-15 percent, by weight.

At least one third component is incorporated into the polyolefin-based film of the present invention. The third component provides flexibility and squeezability to the polyolefin-based film. The third component can be selected from a variety of elastomeric materials including thermoplastic elastomeric materials or vulcanized thermoset rubber materials. Suitable thermoplastic elastomeric materials include polymers and copolymers of styrene-based materials, such as, for example, Kraton® compounds examples of which include block copolymers of styrene-ethylene/butylene-styrene, styrene-butadiene-styrene, or styrene-isoprene-styrene, which are available from the Shell Corp. Other suitable third component materials include copolyester-based materials, such as, for example, Hytrel® compounds which are block copolymers of polybutylene-terephthalate and polyether glycols which are available from the DuPont Co. Still other suitable third component materials include olefinic-based materials, such as, for example, Santoprene® compounds which are blends of ethylene-propylene-diene monomer rubber and polypropylene, available from the Monsanto Company. Still other suitable third component materials include polyurethane-based materials, such as, for example, Pellethane® compounds which are polymers of polytetramethylene glycol ether or polyester polyadipate available from the Dow Corp. Still another third component can be a melt processable rubber, such as, for example, Alcryn® compounds which are partially halogenated polyolefin alloy materials available from the DuPont Corp. In addition, various vulcanized thermoset rubber materials or natural rubber materials may be utilized as an alternative third component in the polyolefin-based film. For example, the third component can comprise vulcanized rubber materials present in minute particles and distributed throughout the polyolefin-based film. In one embodiment, the third component is present in an amount of about 2 to 20 percent, by weight, of the polyolefin-based film and in certain embodiments, about 5-15 percent, by weight.

The polyolefin-based film of the present invention can be produced having the requisite stiffness, flexibility and can be readily die-cut by the addition of the combination of at least one of the second components and at least one of the third components. The polyolefin-based film may also contain pigments to impart desirable characteristics such that the film can easily be colored. One such pigment is a whitener such as titanium oxide.

The polyolefin-based film can be processed into pressure-sensitive labels by using conventional processing methods and can receive conventional, commercially available pressure sensitive adhesives, which are well-known in the art. The polyolefin-based film can be corona treated, as is known in the art, such that the surfaces of the film readily accept any printing ink and readily receive any pressure sensitive adhesives.

The film of the present invention can be made using conventional casting or blown film methods which incorporate a conventional method for producing a film having a matte finish on one side of the film. One such method for making one-side matte embossed film comprises compression of a molten polyolefin-based polymer between a polished chrome roll and a rubber roll. The polyolefin-based film has a dull matte texture on one surface while the other surface has a glossy smooth texture. The one-side matte texture provides the film with abrasion resistance and pick-off resistance for ink by protecting the ink on the printed label. The matte texture of the film has small recessed reservoirs which are filled with ink during the label printing process. The ink in the recessed reservoir is thus protected from scuffing and abrasion.

The matte texture also aids in the winding up process of the film by reducing the coefficient of friction. The reduced coefficient of friction further facilitates the smooth running of the film when the label is being applied onto the surface of the end-use container or product.

The one-side matte film of the present invention thus has a side with a near mirror finish on the glossy smooth side. It is contemplated that the smooth side of the polyolefin-based film of the present invention have a smoothness in the range of from about 0.25 to about 10 Ra. In this connection, Ra is defined as the arithmetic average height of the micropeaks to the center line of a particular finished surface, as measured by a profilometer. This measurement is usually expressed in $10^{-6}$ microinches.

4

The one-side matte polyolefin-based film of the present invention can be printed upon either the matte finish side or the smooth finish side. The smooth side of the polyolefin-based film allows the label manufacturer to put a thinner adhesive layer on the film of the present invention, than normally is required in labelmaking processes. The smooth side of the film has virtually no peaks or valleys on its surface. The thinner adhesive layer performs equally as well as thicker adhesive layers, thus allowing for a reduction in label manufacturing costs.

The near mirror finish also allows the label manufacturer the option of printing on the smooth side of the film for label applications desiring high sparkle and gloss on the printed label. Thus, the one-side matte polyolefin film provides the label manufacturer with greater versatility. In addition, the label manufacturer needs only stock one type of film, thereby decreasing film inventory and complications of logistics and production methods.

The one-side matte polyolefin-based film of the present invention can be manufactured either clear or white, by the addition of such coloring or whitening materials. Thus, the polyolefin-based film provides the label end-user with still greater versatility since there are now available clear or white labels with glossy or matte surfaces.

The present invention is further illustrated by the following examples, all parts and percentages in the example as well as the specification and claims are by weight, unless otherwise specified.

The following example is given to illustrate the utility and scope of the present invention and illustrates the usefulness of the one-side matte polyolefin-based film in label applications.

A one-side matte extruded cast film was made of the following (weight %):

72% HDPE such as from Occidental Chemical Corp.

11% micro Mica from KMG Minerals

9% Thermoplastic elastomer such as Kraton G from Shell

8% $TiO_2$ (white)

The physical properties of the one-side matte polyolefin-based film follow, where MD is machine direction and TD is transverse direction:

| "Thickness by weight" Gauge (mils) | | | : | 3.35 |
|---|---|---|---|---|
| Tensile Strength | (psi) | MD | : | 2,585 |
| | | TD | : | 2,540 |
| Elongation | (%) | MD | : | 620 |
| | | TD | : | 622 |
| Secant Modulus at 1% elongation | (psi) | MD | : | 77,020 |
| | | TD | : | 73,130 |
| Tear Strength | (gms/mil) | MD | : | 33 |
| | | TD | : | 37 |
| Density | (gms/cc) | | : | 1.077 |

Die-cuttability performance of the film is measured by stretching the film at a predetermined strain rate for a predetermined length of time at a predetermined temperature and then computing the area under the stress-strain curve. In the industry, the die-cuttability value is a relative number, wherein any number about 0.5 is desirable. The die-cuttability value of the above-tested film was 0.5.

Above film was corona treated (either glossy or matte side) and coated with a pressure sensitive adhesive at about 0.9 - 1.0 mil to form a label. Thereafter, the label was allowed to age for 24 hours at room temperature. The label was then applied to a squeezable bottle and aged for 24 hrs. Thereafter, the label was subjected to a squeezability test which consisted of squeezing the bottle (till both sides touch each other) 10 times every hour for a total of 8 hours and checking for any creasing, cracking or tunneling. The film passed the 80 squeezes with no failure of any kind.

Many other variations, modifications, and alternative embodiments may be made in the one-side matte polyolefin-based film described herein, by those skilled in the art, without departing from the concept of the present invention. Accordingly, it should be clearly understood that the film and methods referred to in the foregoing description are illustrative only and are not intended as limitations on the scope of this invention, as defined in the following claims.

**Claims**

1. A one-side matte embossed polyolefin-based film comprising:
   a first component comprising at least one polyolefin polymer material having a density of from about .90 to .965 g/cc;
   a second component comprising at least one material incompatible with the polyolefin polymer, which improves stiffness and die-cuttability of the polyolefin-based film; and
   a third component comprising at least one elastomeric material which improves flexibility and squeezability of the polyolefin-based film, wherein the polyolefin-based film has a smooth side and a matte embossed side, the smooth side ranging in smoothness from about 0.25 to about 10 Ra.

2. A film as claimed in claim 1 wherein the first component comprises a polyolefin polymer selected from polyethylene and polypropylene.

3. A film as claimed in claim 2, wherein the polyethylene is a medium density polyethylene having a density of from about 0.93 to about 0.94 g/cc.

4. A film as claimed in claim 2, wherein the polyethylene is a high density polyethylene having a density of from about 0.94 to about 0.965 g/cc.

5. A film as claimed in any one of the preceding claims wherein the second component comprises a filler material including mica, calcium carbonate, or clay.

6. A film as claimed in any one of the preceding claims wherein the second component comprises a polymeric material including polystyrene or polymethylmethacrylate.

7. A film as claimed in any one of the preceding claims wherein the second component comprises a filler material and a polymeric material.

8. A film as claimed in any one of the preceding claims wherein the third component comprises a thermoplastic elastomeric material.

9. A film as claimed in claim 8 wherein the thermoplastic elastomeric material comprises polymers or copolymers of a styrene-based thermoplastic elastomeric material.

10. A film as claimed in claim 8 wherein the thermoplastic elastomeric material comprises copolymers of a polyester-based thermoplastic elastomeric material.

11. A film as claimed in claim 8 wherein the thermoplastic elastomeric material comprises polymers of an olefinic-based thermoplastic elastomeric material.

12. A film as claimed in claim 8 wherein the thermoplastic elastomeric material comprises polymers of a polyurethane-based thermoplastic elastomeric material.

13. A film as claimed in any one of claims 1 to 7 wherein the third component comprises a vulcanized thermoset rubber material.

14. A film as claimed in any one of claims 1 to 7 wherein the third component comprises a melt processssable rubber material.

15. A film as claimed in any one of the preceding claims wherein the first component is present in about 55-90 weight percent, and preferably about 70-80 weight percent, based on the weight of the film.

16. A film as claimed in any one of the preceding claims wherein the second component is present in about 5-25 weight percent, preferably about 5-15 weight percent, based on the weight of the film.

17. A film as claimed in any one of the preceding claims wherein the third component is present in about 2-20 weight percent, preferably about 5-15 weight percent, based on the weight of the film.

18. A film as claimed in claim 1 wherein the first component consists essentially of a high density polyethylene having a density of from about 0.94 to about 0.965 g/cc, the second component consists essentially of a mica filler material, and the third component consists essentially of a styrene-based thermoplastic elastomeric material.

19. A film as claimed in any one of the preceding claims having a thickness in the range of about 1.0 to about 5.0 mils, preferably about 2.5 to about 3.5 mils.

20. A flexible and deformable pressure-sensitive label for use on a rigid, semi-rigid and flexible container or product comprising a facestock material consisting essentially of the one-side matte embossed polyolefin-based film as claimed in claim 1, a pressure-sensitive adhesive, and a release liner material.

21. A label as claimed in claim 20, wherein the pressure-sensitive adhesive may be applied to either the matte embossed side or the smooth side of the polyolefin-based film.

22. A label as claimed in claim 20 or claim 21 wherein the one-side matte embossed polyolefin-based film imparts improved characteristics of adhesion to the container or product with no wrinkle or cracking damage from processing or use conditions due to flexing or deforming of the container or product.

23. A label as claimed in any one of claims 20 to 22, wherein the polyolefin-based film and pressure sensitive adhesive are applied to a circular or cylindrical container or product.

24. A container or product having applied thereto a label as claimed in any one of claims 20 to 23.